# EUROPÄISCHE PATENTSCHRIFT

(11) **EP 1 893 405 B1**
(45) Veröffentlichungstag und Bekanntmachung des Hinweises auf die Patenterteilung: **16.11.2011**
(21) Anmeldenummer: 06753645.8
(22) Anmeldetag: 17.05.2006
(51) Int. Cl.: B32B 25/08

(54) **VERBUNDBAUTEIL AUS WÄRMEHÄRTENDEN HARZEN UND ELASTOMEREN, VERFAHREN ZUR HERSTELLUNG UND VERWENDUNG EINES SOLCHEN VERBUNDTEILS**
COMPOSITE STRUCTURE FROM THERMOSETTING RESINS AND ELASTOMERS, METHOD FOR PRODUCING THE SAME AND USE OF SAID COMPOSITE STRUCTURE
COMPOSANT COMPOSITE REALISE EN RESINES THERMODURCISSABLES ET ELASTOMERES, PROCEDE DE FABRICATION ET UTILISATION

(30) Priorität: 17.05.2005 DE 102005023320
(43) Veröffentlichungstag der Anmeldung: 05.03.2008
(73) Patentinhaber: Gummiwerk Kraiburg GmbH & Co. KG, 84478 Waldkraiburg (DE)
(72) Erfinder: SCHAUBE, Jens, 84539 Ampfing (DE); MAIER, Peter, 84431 Heldenstein (DE)
(74) Vertreter: Wiese, Gerhard
(86) Internationale Anmeldenummer: PCT/EP2006/004611
(87) Internationale Veröffentlichungsnummer: WO 2006/122749

(56) Entgegenhaltungen:
- EP-A- 0 653 299
- US-A- 5 232 531
- US-A- 5 484 848
- US-A- 6 110 319
- DATABASE WPI Section Ch, Week 199808 Derwent Publications Ltd., London, GB; Class A18, AN 1998-081475 XP002393282 & JP 09 314751 A (BRIDGESTONE CORP) 9. Dezember 1997 (1997-12-09)
- DATABASE WPI Section Ch, Week 200019 Derwent Publications Ltd., London, GB; Class A12, AN 2000-216752 XP002393283 & JP 2000 043063 A (BANDO CHEM IND LTD) 15. Februar 2000 (2000-02-15)
- DATABASE WPI Section Ch, Week 200001 Derwent Publications Ltd., London, GB; Class A93, AN 2000-006722 XP002393284 & JP 11 286076 A (YOKOHAMA RUBBER CO LTD) 19. Oktober 1999 (1999-10-19)

## Beschreibung

Die Erfindung betrifft ein Verbundbauteil aus wärmehärtenden Harzen und Elastomeren gemäß dem Oberbegriff des Patentanspruchs 1, ein Verfahren zum Herstellen eines solchen Verbundbauteils gemäß Patentanspruch 18 und eine vorteilhafte Verwendung gemäß den Patentansprüchen 27 bis 33.

Der momentane Stand der Technik zur Herstellung von Formteilen aus einem wärmehärtenden Harz mit einer Elastomerschicht besteht darin, dass zunächst ein Formteil aus wärmehärtendem Harz hergestellt und hierauf in einem erneuten Arbeitsgang die Elastomerschicht aufgebracht wird. Dieses System findet derzeit Anwendung bei elastomerbeschichteten Walzen oder Zylindern sowie anderen Mehrkomponenten-Formteilen. Die Herstellung bzw. Aushärtung des harzbasierenden Formteils erfolgt in Autoklaven oder Heizpressen bei erhöhter Temperatur, wobei zusätzlich eine verstärkende Einlage aus einem Gewebe oder faserartigen Materialien mit eingebracht sein kann. Bei beiden Vorgängen erfolgt die Aushärtung durch eine chemische Reaktion. Auf diese Weise können z.B. Rollen, Räder, rutschfeste Beschichtungen aus Kunststoff oder mit einer gewissen Eigensteifigkeit versehene Elastomerartikel hergestellt werden.

Bei der Verwendung von Kunstoffplatten z.B. im Fahrzeug- oder Schiffbau werden an den Kanten Elastomerprofile befestigt z.B. aufgeklebt oder angeschraubt, um eine Abdichtung und den Ausgleich unterschiedlicher thermischer Ausdehnungskoeffizienten zu erreichen oder um Verspannungen und Quietschen bei durch die Fahrsituation bedingten elastischen Bewegungen der Fahrzeuge zu vermeiden.

Faserverstärkte Kunststoffe sind meist energieelastisch und spröde und können deshalb beim Auftreten eines Energieeintrags durch Schwingungen, Stöße, Schläge oder Beschuss wenig Energie aufnehmen bzw. absorbieren. Das kann zur Zerstörung des Bauteils führen, wobei dann scharfe und gezackte Bruchkanten auftreten, die ein Verletzungsrisiko darstellen. Gegebenenfalls müssen besondere Maßnahmen getroffen werden, um Energie zu absorbieren bzw. die Zerstörung durch Resonanz zu unterbinden. Faserverstärkte Kunststoffe sind auf Grund ihres Harzanteils leicht brennbar und führen im Fall eines Brandes dem Feuer zusätzlichen Brennstoff zu.

Der vorliegenden Erfindung liegt die Aufgabe zugrunde, ein Verbundbauteil, ein Verfahren zu dessen Herstellung und eine Verwendung anzugeben, die eine vielseitige und wirtschaftliche Verwertung derartiger Verbundbauteile ermöglichen.

Diese Aufgabe wird durch die im Patentanspruch 1 angegebenen Mittel hinsichtlich der Vorrichtung, durch die im Patentanspruch 18 angegebenen Mittel hinsichtlich des Verfahrens zur Herstellung und durch die in den Ansprüchen 27 bis 33 angegebenen Verwendungen gelöst. Vorteilhafte Ausgestaltungen der Erfindung sind den jeweiligen Unteransprüchen zu entnehmen.

Die Erfindung sieht vor, dass durch eine chemische Reaktion aus dem wärmehärtenden Harz der Festigkeitsträger bzw. die harte Schicht gebildet und gleichzeitig - ebenfalls durch eine chemische Reaktion - das AushärtenNulkanisieren der mit einem Vernetzer versehenen Elastomerschicht selbst sowie der direkte Verbund der Elastomerschicht mit der harten Schicht erreicht wird. Dabei kann in einer oder beiden Schichten eine Gewebeeinlage, ein Fasermaterial oder Metallpulver enthalten sein. Wenn bei der vorliegenden Erfindung von "Schichten" die Rede ist, können damit ganz oder auch nur partiell übereinander angeordnete oder ineinander eingebettete Streifen, Stücke oder Bereiche aus den genannten Materialien gemeint sein.

Die als Festigkeitsträger fungierende Schicht und die darauf befindliche Elastomerschicht werden in einem Arbeitsgang gemeinsam aufgebaut und anschließend unter Temperatureinwirkung im Autoklav oder einer Heizpresse gemeinsam ausgehärtet bzw. vulkanisiert. Alle beteiligten Rohmaterialien sind so auf einander abgestimmt, dass sie unter gleichen Reaktionsbedingungen gleichzeitig ein chemisches Netzwerk aufbauen und zueinander eine Haftung ausbilden. Durch diese Vorgänge entsteht ein formstabiles Produkt. Die Aushärtetemperatur liegt vorzugsweise zwischen 120 und 190 °C.

Der Aufbau des Mehrkomponentenproduktes aus wärmehärtendem Harz und mit einem Vernetzer versehenen Elastomerschicht geschieht in mehreren Alternativen wie folgt:
- Gemäß einer ersten Alternative wird eine antihaftend beschichtete Form mit den verschiedenen Rohkomponenten der einzelnen Schichten bestückt und das Verbundteil unter Einwirkung von Druck und Temperatur ausgehärtet (Heißpressen).
- Gemäß einer zweiten Alternative wird das aus den Rohmaterialien vorkonfektionierte Produkt ohne Verwendung einer geschlossenen Form bei erhöhter Temperatur im Autoklav oder Heißluftofen ausgehärtet. Es kann dabei auf einem Trägerkörper fixiert sein.
- Gemäß einer dritten Alternative wird das aus den Rohmaterialien vorkonfektionierte Produkt ohne Verwendung einer geschlossenen Form bei erhöhter Temperatur in einem Vakuumsack ausgehärtet.
- Die antihaftende Beschichtung der Form kann erfolgen durch Paraffine, Silikon, Fluorkohlenwasserstoffe (z.B. Teflon).
- Im Verbundprodukt können als Einlage bevorzugt eingebracht sein: Glasfasern, Nylon, Polyester, Kohlefasern, Viskose, Aramidfasern und/oder Metallfasern. Die Einlage kann in Form eines Gewebes, eines Geleges oder als Pulpe vorgesehen sein.
- Als Kunstharze sind bevorzugt verwendbar Polyesterharze, Phenol-Formaldehyd-Harze, Epoxidharze und Acrylatharze.

Die noch nicht vernetzten, jedoch mit einem Vernetzer versehenen elastomeren Bestandteile der Einlagen werden direkt bei der Herstellung der faserverstärkten Kunststoffteile an den entsprechenden Orten mit in die Form gelegt.

Durch das Einbringen von weichen elastomeren Schichten kann durch die Auswahl der geeigneten Materialien sowohl eine Schwingungsabsorbtion als auch eine Schwingungsisolation erreicht werden. Die Rissausbreitung wird unterbunden. Die noch nicht vernetzten elastomeren Schichten werden direkt bei der Herstellung der faserverstärkten Kunststoffteile mit in die Form gelegt.
- Durch das optionale Einbringen von flammhemmend ausgerüsteten Elastomerschichten wird die Brandausbreitung behindert.

Eine besonders vorteilhafte Verwendung eines erfindungsgemäßen Verbundbauteils besteht darin, dass das Verbundbauteil als Energie absorbierendes Bauteil verwendet wird. Generell ist eine Verwendung als stabiles, schwingungsdämpfendes Leichtbauteil vorteilhaft. Dabei ist beispielsweise eine Verwendung als Rotorblatt, beispielsweise eines Windrades oder Helikopters, als Tragfläche von Luftfahrzeugen, als Blattfeder, beispielsweise im Fahrzeugbau, als Schlag oder Geschoß hemmendes Bauteil in Schutzkleidungen, wie Protektoren in Motorradbekleidung oder kugelsicheren Westen oder gepanzerten Fahrzeugen, als stabiler schwingungsdämpfender Kern von Sportgeräten, wie Skiern, Snowboards, Schlitten, Bobs, Surfbrettern, Booten, Tennis- oder Eishockeyschlägern oder dergleichen, als Lager für Maschinen, Maschinenteile, Brücken und andere Bauwerke und Bauwerksteile, als Gehäuse für hochwertige Konsumgüter, wie Computer oder Notebooks, als Wandungen von Rohren oder als Verkleidungs- oder Karosserieteil von Fahrzeugen, wie als Zylinderhaube von Motoren oder als Stoßstange möglich, wobei diese Aufzählung nur exemplarisch und nicht abschließend zu sehen ist.

Im Minimum sind nur jeweils eine Schicht beziehungsweise eingelegte oder eingebettete Streifen, Stücke oder Bereiche aus einem wärmehärtbaren Kunstharz und eine Schicht aus einem mit einem Vernetzer versehenen Elastomer vorgesehen. Für bestimmte Anwendungszwecke ist ein mehrschichtiger Aufbau vorteilhaft, wobei vorteilhaft jeweils eine Kunstharzschicht und eine mit einem Vernetzer versehene Elastomerschicht einander abwechseln und wobei vorteilhaft eine oder beide Außenschichten durch Kunstharzschichten gebildet werden. Der Sandwich-Aufbau kann jedoch auch umgekehrt werden, wenn weiche Außenschichten erwünscht sind, wie beispielsweise bei einem Tischtennisschläger, einem Innenverkleidungsteil eines Fahrzeugs oder einem Mouse-Pad.

Weitere Vorteile der Erfindung sind:
- Die separate Herstellung eines harzbasierenden Festigkeitsträgers ist nicht mehr notwendig.
- Der Aufbau des gesamten Formteils geschieht in einem durchgehenden Arbeitsgang an demselben Arbeitsplatz.
- Eine Verwendung von Haftvermittlern ist nicht nötig.
- Geringerer Zeitaufwand für die Herstellung, dadurch erhebliche Kostensenkung.
- Die Herstellung einer elektrisch ableitenden Variante ist ohne signifikant höhere Materialkosten durch Einbetten leitender Fäden, Streifen oder Gewebe möglich.
- Es sind völlig neuartige Konstruktionen möglich.
   - Energieabsorbierende Bauteile in Leichtbauweise (z.B. Prepreg/Elastomer/Prepreg, siehe weiter unten)
   - Aufbringen rutschfester -Beschichtungen auf Formteile wie Surfboards etc.
   - Elastomerbeschichtete Zylinder oder Rohre
   - Verbundteile mit Kompensatorwirkung
   - Versteifung von Elastomerartikeln
   - Bauteile mit reduzierter Bruch- oder Splitterneigung bei Deformation. Auch die Absorbtion der Energie von Geschossen, Stößen oder Schlägen ist möglich.
   - Flammhemmende Verbundteile durch Einbau unbrennbarer elastischer Schichten (z.B. Metall- oder Metallhydroxidpartikel oder halogenierte Paraffine als Zuschlagstoffe im Elastomer).
   - Selbstlöschende Gummimischungen (in der Gummimischung enthaltenes Wasser löscht im Brandfall das Elastomer und die Karbonfasern)

Nachfolgend sind Ausführungsbeispiele der Erfindung anhand der Zeichnung beschrieben. Im Einzelnen zeigt:
- Fig. 1: den grundsätzlichen Aufbau eines Verbundbauteils mit drei Schichten aus einem wärmehärtenden Kunstharz und zwei jeweils dazwischen angeordneten Elastomerschichten,
- Fig. 2: eine schematische Darstellung eines Rotorblatts eines Windrades,
- Fig. 3: ein aus mehreren Blattfedern zusammengesetztes Blattfederpaket eines Fahrzeugs und
- Fig. 4: einen Teilschnitt durch den Ansatz eines Rotorblatts an der Nabe eines Windrades gemäß Fig. 2.

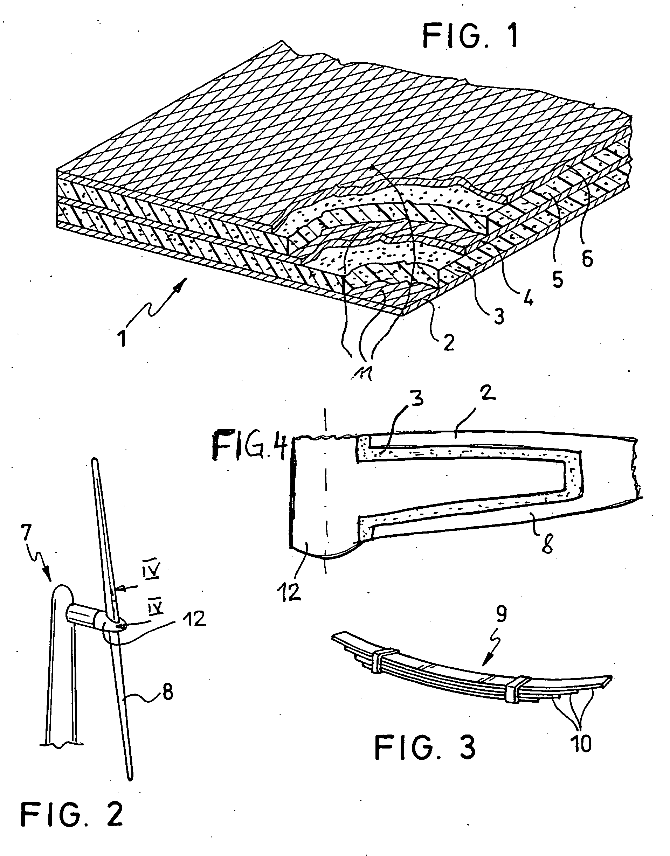

In Fig. 1 ist ein erfindungsgemäßes Verbundbauteil 1 schematisch in seinem Aufbau dargestellt. Das Verbundbauteil 1 weist dabei eine unten liegende Trägerschicht 2, eine darauf angeordnete, mit einem Vernetzer versehene Elastomerschicht 3, eine darauf angeordnete Zwischenschicht 4, eine darauf angeordnete weitere mit einem Vernetzer versehene Elastomerschicht 5 und schließlich eine daran nach oben anschließende Deckschicht 6 auf. Die Trägerschicht 2, die Zwischenschicht 4 und die Deckschicht 6 bestehen jeweils zumindest teilweise aus einem wärmehärtenden Kunstharz, das jeweils bevorzugt mit einem Gewebematerial als Einlage verbunden ist. Die Elastomerschichten 3 und 5 bestehen bevorzugt aus einem im wesentlichen auf Kautschuk (Naturkautschuk oder Synthesekautschuk) basierenden, mit einem Vernetzer versehene Elastomer. Sie können ebenfalls optional mit einer Einlage aus Gewebematerial versehen werden.

Als Materialien für das Kunstharz werden bevorzugt Polyesterharze, Phenol-Formaldehyd-Harze, Epoxidharze und Acrylatharze verwendet.

Als Material für die Einlage, die in Form eines Gewebes, Geleges oder als Pulpe verwendet wird, kommen bevorzugt Glasfasern, Nylon, Polyester, Kohlefasern, Viskose, Aramidfasern oder Metallfasern in Betracht. Alternativ oder ergänzend dazu ist auch eine Verwendung eines Metallpulvers als Einlage in wenigstens einer der Schichten möglich. Dadurch können gezielt bestimmte physikalische Eigenschaften des Verbundbauteils 1 erzeugt werden, wie beispielsweise dessen Festigkeit, Biegsamkeit und Elastizität, dessen Feder- und Dämpfungsverhalten, dessen elektrische Leitfähigkeit oder dessen Entflammbarkeit.

Für die Schichten, die zumindest teilweise aus einem wärmehärtenden Kunstharz gebildet sind, ist es vorteilhaft, vorgefertigte mit Kunstharz imprägnierte Gewebe, so genannte Prepregs, zu verwenden. Bei diesen entfällt das Auftragen des flüssigen, hochviskosen oder festen Kunstharzes. Die Prepregs sind einfach zu handhaben und leicht auf die nötige Größe zurecht zu schneiden.

Für die Herstellung des erfindungsgemäßen Bauteils kommen unterschiedliche Verfahren in Betracht. Allen Verfahren gemeinsam ist, dass die Schichten aus wärmehärtendem Kunstharz und die mit einem Vernetzer versehenen Elastomerschichten gemeinsam einer Wärmebehandlung bzw. einer anderen vernetzenden Behandlung, beispielsweise mit ultravioletter Strahlung (UV-Licht) unterzogen und dadurch miteinander verbunden werden.

In einer ersten Variante werden die Rohmaterialien für die einzelnen Schichten in eine mehrteilige Form eingelegt, die dann geschlossen, beheizt und gegebenenfalls zusätzlich unter Druck gesetzt wird (Heißpressen).

In einer zweiten Variante werden die Rohmaterialien in eine offene Form eingelegt und in einem Autoklav oder Heißluftofen ausgehärtet.

In einer dritten Variante werden die Rohmaterialien bei erhöhter Temperatur in einem Vakuumsack ausgehärtet.

In allen Fällen können die Schichten des Verbundbauteils zusätzlich auf einem Trägerkörper beispielsweise aus Metall fixiert sein, der dann durch die Verbindung infolge der Wärmebehandlung mit Bestandteil des Verbundbauteils wird.

In der ersten und zweiten Variante wird die Form vor dem Einlegen der Schichten mit einer dehäsiven, nicht haftenden Beschichtung versehen, um ein Ankleben des Verbundbauteils 1 an der Form während der Wärmebehandlung zu verhindern. Als Material für diese nicht haftende Beschichtung wird bevorzugt ein Stoff aus der Gruppe der Paraffine, der Silikone oder der Fluorkohlenwasserstoffe verwendet.

Die Wärmebehandlung erfolgt bei einer Temperatur von etwa 120 °C bis etwa 190 °C. Die Aushärtezeit richtet sich nach den Materialien, deren Schichtdicken und der Temperatur.

Eine bevorzugte Verwendung eines erfindungsgemäßen Verbundbauteils ist in Fig. 2 und 4 gezeigt. Dort ist ein Rotor bzw. Rotorblatt 8 eines Windrades 7 als Verbundbauteil mit einem Aufbau der Schichten gemäß Fig. 1 ausgebildet. Ein derartiges Rotorblatt 8 weist ein sehr gutes Dämpfungsverhalten gegen auftretende Dreh- und Dehnschwingungen auf, da eine weichere Elastomerschicht 3 zwischen der harten Tragschicht der Rotornabe 12 und der harten Deckschicht des Rotorblatts 8 für eine Entkopplung und Dämpfung dieser Schwingungen sorgt. Es können mehrere derartige mit einem Vernetzer versehene Elastomerschichten über die Länge des Rotorblatts 8 verteilt angeordnet sein, wobei deren Abmessungen und Dicke gezielt für die Dämpfung bestimmter Schwingungsfrequenzbereiche ausgelegt sein kann.

Ein weiteres Beispiel einer bevorzugten Verwendung ist in Fig. 3 dargestellt. Dort ist ein aus mehreren Blattfedern 10 aufgebautes Blattfederpaket 9 gezeigt, wie es beispielsweise zur Lagerung eines Aufbaus eines Nutzfahrzeuges an dessen Achse verwendet wird. Die einzelnen Blattfedern 10 weisen einen Aufbau mit wenigstens einer mit einem Vernetzer versehenen Elastomerschicht und mit wenigstens jeweils einer außen liegenden glatten Schicht aus einem Kunstharz mit einer Gewebeeinlage auf. Die einzelnen Blattfedern können mit ihren harten Außenschichten federn und gut gegeneinander gleiten. Die Elastomerschicht sorgt für die nötige Dämpfung oder Entkopplung der Schwingungen.

Generell kann bei den erzeugten Verbundbauteilen je nach Anwendungszweck sowohl eine harte Kunstharzschicht als auch eine weiche mit einem Vernetzer versehene Elastomerschicht die Nutzfläche bilden. Bei einem Surfboard kann beispielsweise die auf dem Wasser gleitende Unterseite als harte Kunstharzschicht ausgebildet sein, während die Oberseite mit einer rutschfesteren, für die Füße angenehmeren weicheren Elastomerschicht versehen ist. Für die Erfindung gibt es eine große Vielzahl von Anwendungszwecken, wie schon weiter oben ausgeführt wurde. In jedem Falle sorgt die gleichzeitige Verbindung aller Schichten untereinander sowie ggfs. zusätzlich mit einem Trägerteil durch eine einzige gemeinsame vernetzende Behandlung bzw. Wärmebehandlung für eine deutlich kostengünstigere Herstellung derartiger Bauteile, so dass die Erfindung für die verschiedensten Wirtschaftsbereiche von hohem Nutzen ist.

Die Elastomerschichten 3 bzw. 5 enthalten ein Vernetzungssystem, welches eine Reaktion mit dem Kunstharz der Trägerschicht 2 bzw. der Zwischenschicht 4 oder der Deckschicht 6 ermöglicht. Als Vernetzer sind je nach verwendetem Elastomer für die Elastomerschichten folgende Materialien aus wenigstens einer der Gruppen der Peroxide, der Amine und/oder der Bisphenole geeignet:

| **Elastomer** | **Peroxid** | **Amin** | **Bisphenol** |
|---|---|---|---|
| Ethylen-Propylen-Dien-Kautschuk (EPDM) | Methacrylat | nein | nein |
| | Acrylat | | |
| | Phenol | | |
| | HMMM | | |
| | (Hexamethoxymethylmelamin) | | |
| Ethylen-Acrylat-Kautschuk (EAM) | ja | ja | nein |
| Fluorkarbon-Kautschuk (FKM) | ja | ja | ja |
| Acrylat-Kautschuk (ACM) | je | ja | nein |
| Acrylnitril-Butadien-Kautschuk (NBR) | Methacrylat | nein | nein |
| | Acrylat | | |
| Hydrierter Nitril-Kautschuk (HNBR) | Phenol | | |
| | HMMM | | |
| Hydrierter Carboxylat-Nitril-Kautschuk (XHNBR) | | | |
| Carboxylat-Nitril-Kautschuk (X-NBR) | Zinkperoxid | nein | nein |
| Naturkautschuk (NR) | Methacrylat | nein | nein |
| | Acrylat | | |
| | Phenol | | |
| | HMMM | | |
| Ethyl-Vinyl-Acetat (EVA) | Methacrylat | ja | nein |
| Chlorsulfonyl-Polyäthylen-Kautschuk (CSM) | Acrylat | | |
| | Phenol | | |
| CM (chloriertes Polyethylen z.B. Tyrin) | HMMM | | |
| Butyl-Kautschuk (BIIR) | Bismalein -imide | nein | nein |
| | m-Phenylen-HVA-2-bismaleinimid | | |
| Silikon-Kautschuk (VMQ, MVQ) | ja (Acrylate) | nein | nein |
| Fluor-Silikon-Kautschuk (MFQ, FVMQ) | ja (Acrylate) | nein | nein |
| Polyurethan (PU, einkomponentig) | ja (Acrylate) | nein | nein |
| Chlorhydrin-Kautschuk (CO) Epichlorhydrin-Kautschuk (ECO) | ja | Thioharnstoff und -derivate u.a. | nein |
| Polychlorpren-Kautschuk (CR) | ja | Thioharnstoff und -derivate u.a. | nein |

### Bezugszeichenliste

- 1: Verbundbauteil
- 2: Kunstharz-Trägerschicht (optional mit Gewebematerial)
- 3: Elastomerschicht (optional mit Gewebematerial)
- 4: Kunstharz-Zwischenschicht (optional mit Gewebematerial)
- 5: Elastomerschicht (optional mit Gewebematerial)
- 6: Kunstharz-Deckschicht (optional mit Gewebematerial)
- 7: Windrad
- 8: Rotorblatt
- 9: Blattfederpaket
- 10: Blattfeder
- 11: Einlage (in 2, 4 oder 6)
- 12: Rotornabe

## Patentansprüche

1. Verbundbauteil aus wenigstens zwei Schichten (2, 3, 4, 5, 6), wobei eine erste Schicht (2) zumindest teilweise aus einem wärmehärtenden Kunstharz besteht und wobei eine zweite Schicht (3) zumindest teilweise aus einem Elastomer besteht,
**dadurch gekennzeichnet, dass** die wenigstens eine, teilweise aus einem wärmehärtenden Kunstharz bestehende erste Schicht (2, 4, 6) und die wenigstens eine, zumindest teilweise aus einem mit einem Vernetzer versehenen Elastomer bestehende zweite Schicht (3, 5) durch einen Energieeintrag, wie eine gemeinsame Wärmebehandlung oder eine Bestrahlung mit UV-Licht, in einem Arbeitsgang zusammengefügt sind, wobei die Elastomerschicht (3, 5) wenigstens 0,5 pph (Anteile pro hundert Anteile Gummi) wenigstens eines Vernetzers aus der Gruppe der Peroxide, der Amine und/oder der Bisphenole enthält.

2. Verbundbauteil nach Anspruch 1, **dadurch gekennzeichnet, dass** die wenigstens eine Elastomerschicht (3, 5) im wesentlichen auf Kautschuk basiert.

3. Verbundbauteil nach einem der vorhergehenden Ansprüche, **dadurch gekennzeichnet, dass** eine weitere zumindest teilweise aus einem wärmehärtbaren Kunstharz bestehende Schicht anschließend an eine Elastomerschicht (3, 5) als Deckschicht (6) vorgesehen ist.

4. Verbundbauteil nach einem der vorhergehenden Ansprüche, **dadurch gekennzeichnet, dass** eine weitere zumindest teilweise aus einem wärmehärtbaren Kunstharz bestehende Schicht zwischen zwei Elastomerschichten (3, 5) als Zwischenschicht (4) vorgesehen ist.

5. Verbundbauteil nach einem der vorhergehenden Ansprüche, **dadurch gekennzeichnet, dass** in wenigstens eine der Schichten (2, 3, 4, 5, 6) eine Einlage (11) aus einem Feststoff eingebettet ist.

6. Verbundbauteil nach Anspruch 5, **dadurch gekennzeichnet, dass** die Einlage (11) von einem Gewebe gebildet ist.

7. Verbundbauteil nach Anspruch 5, **dadurch gekennzeichnet, dass** die Einlage (11) von einem Fasermaterial gebildet ist.

8. Verbundbauteil nach einem der Ansprüche 5 bis 7, **dadurch gekennzeichnet, dass** das Gewebematerial oder Fasermaterial aus wenigstens einer der Gruppen der Glasfasern, der Nylonfaser, der Polyesterfasern, der Kohlefasern, der Viskosefasern, der Aramidfasern und/oder der Metallfasern gebildet ist.

9. Verbundbauteil nach Anspruch 5, **dadurch gekennzeichnet, dass** die Einlage (11) von einem Metallpulver gebildet ist.

10. Verbundbauteil nach einem der vorhergehenden Ansprüche, **dadurch gekennzeichnet, dass** das Kunstharz von wenigstens einem Stoff aus einer der Gruppen der Polyesterharze, der Phenol-Formaldehyd-Harze, der Epoxidharze oder der Acrylatharze gebildet ist.

11. Verbundbauteil nach einem der vorhergehenden Ansprüche, **dadurch gekennzeichnet, dass** alle Schichten in einer gemeinsamen Form verbunden sind.

12. Verbundbauteil nach einem der vorhergehenden Ansprüche, **dadurch gekennzeichnet, dass** bei Verwendung von Ethylen-Propylen-DienKautschuk (EPDM), Ethylen-Acrylat-Kautschuk (EAM), Fluorkarbon-Kautschuk (FKM), Acrylat-Kautschuk (ACM), Acrylnitril-Butadien-Kautschuk (NBR), Hydriertem Nitril-Kautschuk (HNBR), Carboxylat-Nitril-Kautschuk (XHNBR), Naturkautschuk (NR), Ethyl-Vinyl-Acetat (EVA), Chlorsulfonyl-Polyäthylen-Kautschuk (CSM), Silikon-Kautschuk (VMQ, MVQ), Fluor-Silikon-Kautschuk (FVMQ, MFQ), Chlorhydrin-Kautschuk (CO), Epichlorhydrin-Kautschuk (ECO), Polychlorpren-Kautschuk (CR) oder einkomponentigem Polyurethan (PU) als Elastomerschicht (3, 5) 0,5 bis 15 pph, insbesondere 1,5 bis 5 pph eines Peroxids als Vernetzer vorgesehen sind.

13. Verbundbauteil nach einem der vorhergehenden Ansprüche, **dadurch gekennzeichnet, dass** bei Verwendung von Ethylen-Propylen-DienKautschuk (EPDM), Ethylen-Acrylat-Kautschuk (EAM), Fluorkarbon-Kautschuk (FKM), Acrylat-Kautschuk (ACM), Acrylnitril-Butadien-Kautschuk (NBR), Hydriertem Nitril-Kautschuk (HNBR), Carboxylat-Nitril-Kautschuk (XHNBR), Naturkautschuk (NR), Ethyl-Vinyl-Acetat (EVA), Chlorsulfonyl-Polyäthylen-Kautschuk (CSM), Silikon-Kautschuk (VMQ, MVQ), Fluor-Silikon-Kautschuk (FVMQ, MFQ) oder einkomponentigem Polyurethan (PU) als Elastomerschicht (3, 5) 0,5 bis 15 pph, insbesondere 1,5 bis 5 pph eines wärmehärtenden Harzes auf Acrylatbasis als Vernetzer vorgesehen sind.

14. Verbundbauteil nach einem der vorhergehenden Ansprüche, **dadurch gekennzeichnet, dass** bei Verwendung von Ethylen-Propylen-DienKautschuk (EPDM), Ethylen-Acrylat-Kautschuk (EAM), Fluorkarbon-Kautschuk (FKM), Acrylat-Kautschuk (ACM), Acrylnitril-Butadien-Kautschuk (NBR), Hydriertem Nitril-Kautschuk (HNBR), Carboxylat-Nitril-Kautschuk (XHNBR), Naturkautschuk (NR), Ethyl-Vinyl-Acetat (EVA), Chlorsulfonyl-Polyäthylen-Kautschuk (CSM), Silikon-Kautschuk (VMQ, MVQ) oder einkomponentigem Polyurethan (PU) als Elastomerschicht (3, 5) 0,5 bis 15 pph, insbesondere 1,5 bis 5 pph eines Phenolharzes als Vernetzer vorgesehen sind.

15. Verbundbauteil nach einem der vorhergehenden Ansprüche, **dadurch gekennzeichnet, dass** bei Verwendung von Ethylen-Acrylat-Kautschuk (EAM), Fluorkarbon-Kautschuk (FKM), Chlorhydrin-Kautschuk (CO), Epichlorhydrin-Kautschuk (ECO) oder Polychlorpren-Kautschuk (CR) als Elastomerschicht (3, 5) 0,5 bis 15 pph, insbesondere 1,5 bis 5 pph eines Amins als Vernetzer vorgesehen sind.

16. Verbundbauteil nach einem der vorhergehenden Ansprüche, **dadurch gekennzeichnet, dass** bei Verwendung von Fluorkarbon-Kautschuk (FKM), als Elastomerschicht (3, 5) 0,5 bis 15 pph, insbesondere 1,5 bis 5 pph eines Bisphenols als Vernetzer vorgesehen sind.

17. Verbundbauteil nach einem der vorhergehenden Ansprüche, **dadurch gekennzeichnet, dass** bei Verwendung von Epichlorhydrin-Kautschuk (ECO), als Elastomerschicht (3, 5) 0,5 bis 15 pph, insbesondere 1,5 bis 5 pph eines Thioharnstoffs oder Thioharnstoffderivates als Vernetzer vorgesehen sind.

18. Verfahren zur Herstellung eines Verbundbauteils gemäß wenigstens einem der Patentansprüche 1 bis 17 aus wenigstens zwei Schichten (2, 3, 4, 5, 6), wobei eine erste Schicht (2) zumindest teilweise aus einem wärmehärtenden Kunstharz besteht und wobei eine zweite Schicht (3) zumindest teilweise aus einem mit einem Vernetzer versehenen Elastomer besteht, **gekennzeichnet durch** folgende Verfahrensschritte:
a) Aufbringen einer nichthaftenden Schicht auf die Innenseite einer Form,
b) Einbringen einer ersten, zumindest teilweise aus einem Kunstharz bestehenden Schicht (2) in die Form,
c) Einbringen einer Einlage (11) aus einem Gewebe, Fasermaterial oder Metallpulver in die erste Schicht (2), wobei die Verfahrensschritte b) und c) auch in umgekehrter Reihenfolge oder gleichzeitig erfolgen können,
d) Aufbringen einer zweiten aus einem mit einem Vernetzer versehenen Elastomer bestehenden Schicht (3) auf die erste Schicht (2),
e) Verbinden der ersten Schicht (2) und der zweiten Schicht (3) **durch** eine gemeinsame Wärmebehandlung oder andere vernetzende Behandlung.

19. Verfahren nach Anspruch 18, **dadurch gekennzeichnet, dass**
f) nach dem Verfahrensschritt d) auf die zweite Schicht (3) eine weitere Schicht aus einem zumindest teilweise aus Kunstharz bestehenden Material als Deckschicht (6) aufgebracht wird.

20. Verfahren nach Anspruch 19, **dadurch gekennzeichnet, dass**
g) in die Deckschicht (6) eine Einlage (11) aus einem Gewebe, Fasermaterial oder Metallpulver eingebettet wird.

21. Verfahren nach Anspruch 18 bis 20, **dadurch gekennzeichnet, dass** zwischen der ersten Schicht (2) und der Deckschicht (6) außer der zweiten Schicht (3) aus einem mit einem Vernetzer versehenen Elastomer wenigstens eine weitere, zumindest teilweise aus einem Kunstharz bestehende Schicht (4), in die wahlweise eine Einlage (11) aus einem Gewebe, Fasermaterial oder Metallpulver eingebettet ist, als Zwischenschicht (4) und daran anschließend wenigstens eine weitere mit einem Vernetzer versehene Elastomerschicht (5) vorgesehen sind, so dass sich die zumindest teilweise aus einem Kunstharz bestehenden Schichten (2, 4, 6), in die wahlweise eine Einlage (11) aus einem Gewebe, Fasermaterial oder Metallpulver eingebettet ist, und die mit einem Vernetzer versehenen Elastomerschichten (3, 5) einander abwechseln.

22. Verfahren nach Anspruch 18 bis 21, **dadurch gekennzeichnet, dass** die Wärmebehandlung bei einer Temperatur von 120 °C bis 190 °C erfolgt.

23. Verfahren nach einem der Ansprüche 18 bis 22, **dadurch gekennzeichnet, dass** die Wärmebehandlung in einem Autoklav erfolgt.

24. Verfahren nach einem der Ansprüche 18 bis 23, **dadurch gekennzeichnet, dass** die Wärmebehandlung in einem Vakuumsack erfolgt.

25. Verfahren nach einem der Ansprüche 18 bis 24, **dadurch gekennzeichnet, dass** die nichthaftende Schicht für die Auskleidung der Form aus einem Stoff der Gruppe der Paraffine, der Silikone oder der Fluorkohlenwasserstoffe besteht.

26. Verfahren nach einem der Ansprüche 18 bis 25, **dadurch gekennzeichnet, dass** wenigstens eine der Elastomerschichten mit einer flammhemmenden Ausrüstung versehen wird.

27. Verwendung eines Verbundbauteils nach einem der Ansprüche 1 bis 26 als Energie absorbierendes Bauteil.

28. Verwendung eines Verbundbauteils nach einem der Ansprüche 1 bis 26 als Rotorblatt (8).

29. Verwendung eines Verbundbauteils nach einem der Ansprüche 1 bis 26 als Blattfeder (10)

30. Verwendung eines Verbundbauteils nach einem der Ansprüche 1 bis 26 als Geschoß-, Stoß- oder Schlag-hemmendes Bauteil.

31. Verwendung eines Verbundbauteils nach einem der Ansprüche 1 bis 26 als Bestandteil eines Sportgeräts, wie eines Ski, eines Snowboards, eines Surfboards oder eines Boots.

32. Verwendung eines Verbundbauteils nach einem der Ansprüche 1 bis 26 als Wandung eines Rohres.

33. Verwendung eines Verbundbauteils nach einem der Ansprüche 1 bis 26 als Bauteil eines Automobils.

## Claims

1. Composite component comprising at least two layers (2, 3, 4, 5, 6), a first layer (2) consisting at least partially of a synthetic thermosetting resin and a second layer (3) consisting at least partially of an elastomer,
**characterized in that** the at least one first layer (2, 6) that consists partially of a synthetic thermosetting resin, and the at least one second layer (3, 5) that consists at least partially of an elastomer provided with a cross-linker are joined together in one operation by an input of energy, such as a common thermal treatment or irradiation with UV light, the elastomer layer (3, 5) containing at least 0.5 pph (parts per hundred parts of rubber) of at least one cross-linker from the group comprising the peroxides, the amines and/or the bisphenols.

2. Composite component according to Claim 1, **characterized in that** the at least one elastomer layer (3, 5) is substantially based on rubber.

3. Composite component according to one of the preceding claims, **characterized in that** a further layer consisting at least partially of a synthetic thermosetting resin is subsequently provided on the elastomer layer (3, 5) as a top layer (6).

4. Composite component according to one of the preceding claims, **characterized in that** a further layer consisting at least partially of a synthetic thermosetting resin is provided between two elastomer layers (3, 5) as an intermediate layer (4).

5. Composite component according to one of the preceding claims, **characterized in that** an inlay (11) consisting of a solid is embedded in at least one of the layers (2, 3, 4, 5, 6).

6. Composite component according to Claim 5, **characterized in that** the inlay (11) is formed by a fabric.

7. Composite component according to Claim 5, **characterized in that** the inlay (11) is formed by a fibre material.

8. Composite component according to one of Claims 5 to 7, **characterized in that** the fabric material or fibre material is formed from at least one of the groups comprising the glass fibres, the nylon fibres, the polyester fibres, the carbon fibres, the viscose fibres, the aramid fibres and/or the metal fibres.

9. Composite component according to Claim 5, **characterized in that** the inlay (11) is formed by a metal powder.

10. Composite component according to one of the preceding claims, **characterized in that** the synthetic resin is formed by at least one substance from one of the groups comprising the polyester resins, the phenol-formaldehyde resins, the epoxy resins or the acrylate resins.

11. Composite component according to one of the preceding claims, **characterized in that** all the layers are joined in a common mould.

12. Composite component according to one of the preceding claims, **characterized in that** when ethylene-propylene-diene rubber (EPDM), ethylene-acrylate rubber (EAM), fluorocarbon rubber (FCM), acrylate rubber (ACM), acrylonitrile-butadiene rubber (NBR), hydrated nitrile rubber (HNBR), carboxylate nitrile rubber (XHNBR), natural rubber (NR), ethyl vinyl acetate (EVA), chlorosulfonyl-polyethylene rubber (CSM), silicone rubber (VMQ, NVQ), fluorosilicone rubber (FVMQ, MFQ), chlorohydrin rubber (CO), epichlorohydrin rubber (ECO), polychloroprene rubber (CR) or single-component polyurethane (PU) are used as elastomer layer (3, 5), 0.5 to 15 pph, in particular 1.5 to 5 pph, of a peroxide are provided as cross-linker.

13. Composite component according to one of the preceding claims, **characterized in that** when ethylene-propylene-diene rubber (EPDM), ethylene-acrylate rubber (EAM), fluorocarbon rubber (FCM), acrylate rubber (ACM), acrylonitrile-butadiene rubber (NBR), hydrated nitrile rubber (HNBR), carboxylate nitrile rubber (XHNBR), natural rubber (NR), ethyl vinyl acetate (EVA), chlorosulfonyl-polyethylene rubber (CSM), silicone rubber (VMQ, NVQ), fluorosilicone rubber (FVMQ, MFQ) or single-component polyurethane (PU) are used as elastomer layer (3, 5), 0.5 to 15 pph, in particular 1.5 to 5 pph, of a thermosetting resin based on acrylate are provided as cross-linker.

14. Composite component according to one of the preceding claims, **characterized in that** when ethylene-propylene-diene rubber (EPDM), ethylene-acrylate rubber (EAM), fluorocarbon rubber (FCM), acrylate rubber (ACM), acrylonitrile-butadiene rubber (NBR), hydrated nitrile rubber (HNBR), carboxylate nitrile rubber (XHNBR), natural rubber (NR), ethyl vinyl acetate (EVA), chlorosulfonyl- polyethylene rubber (CSM), silicone rubber (VMQ, NVQ) or single-component polyurethane (PU) are used as elastomer layer (3, 5), 0.5 to 15 pph, in particular 1.5 to 5 pph, of a phenolic resin are provided as cross-linker.

15. Composite component according to one of the preceding claims, **characterized in that** when ethylene-acrylate rubber (EAM), fluorocarbon rubber (FCM), chlorohydrin rubber (CO), epichlorohydrin rubber (ECO) or polychloroprene rubber (CR) are used as elastomer layer (3, 5), 0.5 to 15 pph, in particular 1.5 to 5 pph, of an amine are provided as cross-linker.

16. Composite component according to one of the preceding claims, **characterized in that** when fluorocarbon rubber (FCM) is used as elastomer layer (3, 5), 0.5 to 15 pph, in particular 1.5 to 5 pph, of a bisphenol are provided as cross-linker.

17. Composite component according to one of the preceding claims, **characterized in that** when epichlorohydrin rubber (ECO) is used as elastomer layer (3, 5), 0.5 to 15 pph, in particular 1.5 to 5 pph, of a thiourea or thiourea derivative is provided as cross-linker.

18. Method for producing a composite component according to at least one of Claims 1 to 17 from at least two layers (2, 3, 4, 5, 6), a first layer (2) consisting at least partially of a synthetic thermosetting resin and a second layer (3) consisting at least partially of an elastomer provided with a cross-linker, **characterized by** the following method steps:
a) applying a non-stick layer to the inside of a mould,
b) introducing a first layer (2), consisting at least partially of a synthetic resin, into the mould,
c) introducing an inlay (11) consisting of a fabric, fibre material or metal powder into the first layer (2), it also being possible for method steps b) and c) to be carried out in the opposite order or simultaneously,
d) applying a second layer (3), consisting of an elastomer provided with a cross-linker, to the first layer (2),
e) joining the first layer (2) and the second layer (3) by means of a common thermal treatment or other cross-linking treatment.

19. Method according to Claim 18, **characterized in that**
f) after method step d), a further layer of a material consisting at least partially of synthetic resin is applied to the second layer (3) as a top layer (6).

20. Method according to Claim 19, **characterized in that**
g) an inlay (11) of a fabric, fibre material or metal powder is embedded in the top layer (6).

21. Method according to Claims 18 to 20, **characterized in that** between the first layer (2) and the top layer (6), apart from the second layer (3) of an elastomer provided with a cross-linker, at least one further layer (4) consisting at least partially of a synthetic resin, in which an inlay (11) consisting of a fabric, fibre material or metal powder is optionally embedded is provided as an intermediate layer (4) and, following that, at least one further elastomer layer (5) provided with a cross-linker is provided, so that the layers (2, 4, 6) consisting at least partially of a synthetic resin, in which an inlay (11) or a fabric, fibre material or metal powder is optionally embedded, and the elastomer layers (3, 5) provided with a cross-linker alternate with one another.

22. Method according to Claims 18 to 21, **characterized in that** the thermal treatment is carried out at a temperature of 120° C to 190° C.

23. Method according to one of Claims 18 to 22, **characterized in that** the thermal treatment is carried out in an autoclave.

24. Method according to one of Claims 18 to 23, **characterized in that** the thermal treatment is carried out in a vacuum bag.

25. Method according to one of Claims 18 to 24, **characterized in that** the non-stick layer of the lining of the mould consists of a substance from the group comprising the paraffins, the silicones or the fluorinated hydrocarbons.

26. Method according to one of Claims 18 to 25, **characterized in that** at least one of the elastomer layers is provided with a flame-retarding finish.

27. Use of a composite component according to one of Claims 1 to 26 as an energy-absorbing structure.

28. Use of a composite component according to one of Claims 1 to 26 as a rotor blade (8).

29. Use of a composite component according to one of Claims 1 to 26 as a leaf spring (10).

30. Use of a composite component according to one of Claims 1 to 26 as a bullet-proof, shock- or impact-retarding structure.

31. Use of a composite component according to one of Claims 1 to 26 as a constituent part of a sporting appliance, such as a ski, a snowboard, a surfboard or a boat.

32. Use of a composite component according to one of Claims 1 to 26 as a wall of a pipe.

33. Use of a composite component according to one of Claims 1 to 26 as a component of a car.

## Revendications

1. Élément composite constitué d'au moins deux couches (2, 3, 4, 5, 6), une première couche (2) étant au moins partiellement constituée d'une résine synthétique thermodurcissable et une seconde couche (3) étant au moins partiellement constituée d'un élastomère,
**caractérisé en ce que** la ou les premières couches (2, 4, 6), partiellement constituées d'une résine synthétique thermodurcissable, et la ou les secondes couches (3, 5), au moins partiellement constituées d'un élastomère muni d'un agent de réticulation, sont assemblées en une opération par un apport d'énergie, tel qu'un traitement thermique commun ou une exposition à une lumière UV, la couche élastomère (3, 5) contenant au moins 0,5 pph (parties pour cent parties de caoutchouc) d'au moins un agent de réticulation du groupe des peroxydes, des amines et/ou des bisphénols.

2. Élément composite selon la revendication 1, **caractérisé en ce que** la ou les couches élastomères (3, 5) sont essentiellement à base de caoutchouc.

3. Élément composite selon l'une quelconque des revendications précédentes, **caractérisé en ce qu'**une couche supplémentaire au moins partiellement constituée d'une résine synthétique thermodurcissable est prévue après une couche élastomère (3, 5) en tant que couche supérieure (6).

4. Élément composite selon l'une quelconque des revendications précédentes, **caractérisé en ce qu'**une couche supplémentaire au moins partiellement constituée d'une résine synthétique thermodurcissable est prévue entre deux couches élastomères (3, 5) en tant que couche intermédiaire (4).

5. Élément composite selon l'une quelconque des revendications précédentes, **caractérisé en ce qu'**un insert (11) en un solide est incorporé dans au moins une des couches (2, 3, 4, 5, 6).

6. Élément composite selon la revendication 5, **caractérisé en ce que** l'insert (11) est formé par un tissu.

7. Élément composite selon la revendication 5, **caractérisé en ce que** l'insert (11) est formé par un matériau fibreux.

8. Élément composite selon l'une quelconque des revendications 5 à 7, **caractérisé en ce que** le matériau tissé ou le matériau fibreux est formé à partir d'au moins un des groupes des fibres de verre, des fibres de nylon, des fibres de polyester, des fibres de carbone, des fibres de viscose, des fibres d'aramide et/ou des fibres métalliques.

9. Élément composite selon la revendication 5, **caractérisé en ce que** l'insert (11) est formé par une poudre métallique.

10. Élément composite selon l'une quelconque des revendications précédentes, **caractérisé en ce que** la résine synthétique est formée par au moins une substance d'un des groupes des résines de polyester, des résines de phénol-formaldéhyde, des résines d'époxyde ou des résines d'acrylate.

11. Élément composite selon l'une quelconque des revendications précédente, **caractérisé en ce que** toutes les couches sont reliées dans un moule commun.

12. Élément composite selon l'une quelconque des revendications précédentes, **caractérisé en ce que** lors de l'utilisation d'un caoutchouc d'éthylène-propylène-diène (EPDM), d'un caoutchouc d'éthylène-acrylate (EAM), d'un caoutchouc fluorocarboné (FKM), d'un caoutchouc d'acrylate (ACM), d'un caoutchouc d'acrylonitrile-butadiène (NBR), d'un caoutchouc de nitrile hydrogéné (HNBR), d'un caoutchouc de carboxylate-nitrile (XHNBR), d'un caoutchouc naturel (NR), d'un éthyle-acétate de vinyle (EVA), d'un caoutchouc de chlorosulfonyle-polyéthylène (CSM), d'un caoutchouc de silicone (VMQ, MVQ), d'un caoutchouc de silicone fluorée (FVMQ, MFQ), d'un caoutchouc de chlorhydrine (CO), d'un caoutchouc d'épichlorhydrine (ECO), d'un caoutchouc de polychloroprène (CR) ou d'un polyuréthane monocomposant (PU) en tant que couche élastomère (3, 5), 0,5 à 15 pph, notamment 1,5 à 5 pph, d'un peroxyde sont prévus en tant qu'agent de réticulation.

13. Élément composite selon l'une quelconque des revendications précédentes, **caractérisé en ce que** lors de l'utilisation d'un caoutchouc d'éthylène-propylène-diène (EPDM), d'un caoutchouc d'éthylène-acrylate (EAM), d'un caoutchouc fluorocarboné (FKM), d'un caoutchouc d'acrylate (ACM), d'un caoutchouc d'acrylonitrile-butadiène (NBR), d'un caoutchouc de nitrile hydrogéné (HNBR), d'un caoutchouc de carboxylate-nitrile (XHNBR), d'un caoutchouc naturel (NR), d'un éthyle-acétate de vinyle (EVA), d'un caoutchouc de chlorosulfonyle-polyéthylène (CSM), d'un caoutchouc de silicone (VMQ, MVQ), d'un caoutchouc de silicone fluorée (FVMQ, MFQ) ou d'un polyuréthane monocomposant (PU) en tant que couche élastomère (3, 5), 0,5 à 15 pph, notamment 1,5 à 5 pph, d'une résine thermodurcissable à base d'acrylate sont prévus en tant qu'agent de réticulation.

14. Élément composite selon l'une quelconque des revendications précédentes, **caractérisé en ce que** lors de l'utilisation d'un caoutchouc d'éthylène-propylène-diène (EPDM), d'un caoutchouc d'éthylène-acrylate (EAM), d'un caoutchouc fluorocarboné (FKM), d'un caoutchouc d'acrylate (ACM), d'un caoutchouc d'acrylonitrile-butadiène (NBR), d'un caoutchouc de nitrile hydrogéné (HNBR), d'un caoutchouc de carboxylate-nitrile (XHNBR), d'un caoutchouc naturel (NR), d'un éthyle-acétate de vinyle (EVA), d'un caoutchouc de chlorosulfonyle-polyéthylène (CSM), d'un caoutchouc de silicone (VMQ, MVQ) ou d'un polyuréthane monocomposant (PU) en tant que couche élastomère (3, 5), 0,5 à 15 pph, notamment 1,5 à 5 pph, d'une résine de phénol sont prévus en tant qu'agent de réticulation.

15. Élément composite selon l'une quelconque des revendications précédentes, **caractérisé en ce que** lors de l'utilisation d'un caoutchouc d'éthylène-acrylate (EAM), d'un caoutchouc fluorocarboné (FKM), d'un caoutchouc de chlorhydrine (CO), d'un caoutchouc d'épichlorhydrine (ECO) ou d'un caoutchouc de polychloroprène (CR) en tant que couche élastomère (3, 5), 0,5 à 15 pph, notamment 1,5 à 5 pph, d'une amine sont prévus en tant qu'agent de réticulation.

16. Élément composite selon l'une quelconque des revendications précédentes, **caractérisé en ce que** lors de l'utilisation d'un caoutchouc fluorocarboné (FKM) en tant que couche élastomère (3, 5), 0,5 à 15 pph, notamment 1,5 à 5 pph, d'un bisphénol sont prévus en tant qu'agent de réticulation.

17. Élément composite selon l'une quelconque des revendications précédentes, **caractérisé en ce que** lors de l'utilisation d'un caoutchouc d'épichlorhydrine (ECO) en tant que couche élastomère (3, 5), 0,5 à 15 pph, notamment 1, 5 à 5 pph, d'une thiourée sont prévus en tant qu'agent de réticulation.

18. Procédé de fabrication d'un élément composite selon au moins l'une quelconque des revendications 1 à 17 constitué d'au moins deux couches (2, 3, 4, 5, 6), une première couche (2) étant au moins partiellement constituée d'une résine synthétique thermodurcissable et une seconde couche (3) étant au moins partiellement constituée d'un élastomère muni d'un agent de réticulation, **caractérisé par** les étapes de procédé suivantes :
a) l'application d'une couche non adhérente sur le côté intérieur d'un moule,
b) l'introduction d'une première couche (2) au moins partiellement constituée d'une résine synthétique dans le moule,
c) l'introduction d'un insert (11) constitué d'un tissu, d'un matériau fibreux ou d'une poudre métallique dans la première couche (2), les étapes de procédé b) et c) pouvant également être effectuées dans l'ordre inverse ou simultanément,
d) l'application d'une seconde couche (3) constituée d'un élastomère muni d'un agent de réticulation sur la première couche (2),
e) la liaison de la première couche (2) et de la seconde couche (3) par un traitement thermique commun ou un autre traitement réticulant.

19. Procédé selon la revendication 18, **caractérisé en ce que**
f) après l'étape de procédé d), une couche supplémentaire en un matériau au moins partiellement constitué d'une résine synthétique est appliquée sur la seconde couche (3) en tant que couche supérieure (6).

20. Procédé selon la revendication 19, **caractérisé en ce que**
g) un insert (11) constitué d'un tissu, d'un matériau fibreux ou d'une poudre métallique est incorporé dans la couche supérieure (6).

21. Procédé selon les revendications 18 à 20, **caractérisé en ce qu'**entre la première couche (2) et la couche supérieure (6), en plus de la seconde couche (3) constituée d'un élastomère muni d'un agent de réticulation, au moins une couche supplémentaire (4) au moins partiellement constituée d'une résine synthétique, dans laquelle un insert (11) en un tissu, un matériau fibreux ou une poudre métallique est éventuellement incorporé, est prévue en tant que couche intermédiaire (4), puis sur celle-ci au moins une couche élastomère supplémentaire (5) munie d'un agent de réticulation, de manière à ce que les couches (2, 4, 6) au moins partiellement constituées d'une résine synthétique, dans lesquelles un insert (11) en un tissu, un matériau fibreux ou une poudre métallique est éventuellement incorporé, et les couches élastomères (3, 5) munies d'un agent de réticulation s'alternent.

22. Procédé selon les revendications 18 à 21, **caractérisé en ce que** le traitement thermique a lieu à une température de 120 °C à 190 °C.

23. Procédé selon l'une quelconque des revendications 18 à 22, **caractérisé en ce que** le traitement thermique a lieu dans un autoclave.

24. Procédé selon l'une quelconque des revendications 18 à 23, **caractérisé en ce que** le traitement thermique a lieu dans un sac sous vide.

25. Procédé selon l'une quelconque des revendications 18 à 24, **caractérisé en ce que** la couche non adhérente pour le revêtement du moule est constituée d'une substance du groupe des paraffines, des silicones ou des hydrocarbures fluorés.

26. Procédé selon l'une quelconque des revendications 18 à 25, **caractérisé en ce qu'**au moins une des couches élastomères est munie d'un traitement ignifuge.

27. Utilisation d'un élément composite selon l'une quelconque des revendications 1 à 26 en tant qu'élément absorbant l'énergie.

28. Utilisation d'un élément composite selon l'une quelconque des revendications 1 à 26 en tant que pale de rotor (8).

29. Utilisation d'un élément composite selon l'une quelconque des revendications 1 à 26 en tant que ressort à lames (10).

30. Utilisation d'un élément composite selon l'une quelconque des revendications 1 à 26 en tant qu'élément inhibant les projectiles, les chocs ou les coups.

31. Utilisation d'un élément composite selon l'une quelconque des revendications 1 à 26 en tant que constituant d'un équipement de sport, tel qu'un ski, une planche de snowboard, une planche de surf ou un bateau.

32. Utilisation d'un élément composite selon l'une quelconque des revendications 1 à 26 en tant que paroi d'un tube.

33. Utilisation d'un élément composite selon l'une quelconque des revendications 1 à 26 en tant qu'élément d'une automobile.
